# EUROPÄISCHE PATENTSCHRIFT

(11) **EP 0 515 906 B1**
(45) Veröffentlichungstag und Bekanntmachung des Hinweises auf die Patenterteilung: **03.07.1996**
(21) Anmeldenummer: 92108051.1
(22) Anmeldetag: 13.05.1992
(51) Int. Cl.: B29C 47/88

(54) **Verfahren und Vorrichtung zum Herstellen von strangförmigen Hohlkammerprofilen aus thermoplastischem Werkstoff**
Method and device for producing rope formed hollow profiles from thermoplastic material
Procédé et dispositif pour fabriquer des profilés creux allongés en matières thermoplastiques

(30) Priorität: 27.05.1991 DE 4117221
(43) Veröffentlichungstag der Anmeldung: 02.12.1992
(73) Patentinhaber: SCHÜCO International KG, D-33609 Bielefeld (DE)
(72) Erfinder: Schmahl, Helmut, W-5657 Haan (DE)
(74) Vertreter: Stracke, Alexander, Dipl.-Ing.

(56) Entgegenhaltungen:
- EP-A- 0 047 378
- EP-A- 0 418 760
- DE-A- 2 523 975

## Beschreibung

Die Erfindung bezieht sich auf ein Verfahren zum Herstellen von strangförmigen Hohlkammerprofilen aus thermoplastischem Kunststoff insbesondere für die Fertigung von Fenster- oder Türprofilen, bei dem die Kunststoffschmelze einem mit mindestens einem Kern versehenen Düsenwerkzeug zugeführt wird, in dem der Kern an der Zuführungsseite der Kunststoffschmelze mit dem Werkzeugkörper verbunden und zum Düsenaustritt freitragend angeordnet ist und der Kern mindestens einen von der Stirnseite im Austrittsbereich des Düsenwerkzeuges ausgehenden Kanal für die Kühlmittelführung zwischen der Innenkammer des extrudierten Hohlkammerprofils und der Atmosphäre aufweist, wobei während der Extrusion des Hohlkammerprofils der Kanal des Düsenwerkzeugs und die Innenkammer des Hohlkammerprofils von einem gasförmigen Kühlmedium durchströmt werden.

Die Erfindung betrifft ferner eine Vorrichtung zur Durchführung dieses Verfahrens, sowie eine Vorrichtung zum Herstellen von strangförmigen Hohlkammerprofilen aus thermoplastischem Kunststoff gemäß Oberbegriff des Anspruchs 5.

Es ist ein Verfahren der eingangs genannten Art und eine Vorrichtung zur Kühlung von Kunststoffhohlprofilen bekannt (EP-A-0 047 378), bei dem bzw. bei der durch den Kern des im Extrusionswerkzeug fliegend gelagerten Dornes eine isolierte Leitung geführt wird, an deren Ende eine Düse für das Verstäuben von flüssigem Stickstoff als Kühlmittel vorgesehen ist.

In der praktischen Anwendung, insbesondere für Fenster- und Türprofile aus Kunststoff, hat das bekannte Verfahren keine Bedeutung erlangt, da ein derartiges Verfahren bei Mehrkammerhohlprofilen für Fenster und Türen hinsichtlich der Maßanforderungen in der Praxis nicht beherrschbar ist. Die Mehrkammerhohlprofile, die für Fenster und Türen verwendet werden, weisen eine Reihe von Einzelkammern auf, deren Trennwände möglichst dünnwandig ausgebildet sind. Diese Wände haben auch die Aufgabe, das Profil während des Extrusionsvorganges in Kalibrierbereich zu stützen und zu stabilisieren. Wird in die Hohlkammern eines derartigen Profiles flüssiger Stickstoff eingeblasen, dessen Temperatur unter dem Siedepunkt des Stickstoffs von -195,8 °C liegt, so ist die Gefahr gegeben, daß die dünnen Kammerwandungen aufgrund des Temperaturschocks durchkühlen und somit innerhalb dieser Wandungen eine Schrumpfung einsetzt, die die Außenkalibrierung der Profile sehr stark beeinflußt, so daß in den Außenkonturen Formveränderungen auftreten.

Darüber hinaus ist es äußerst energieaufwendig, verflüssigten Stickstoff bereitzustellen, zumal auch der Transport des flüssigen Stickstoffs durch das heiße Extrusionswerkzeug nicht unproblematisch ist.

Es ist ferner bekannt (EP-A-0 418 760) ein in einem Strangpreßwerkzeug geformtes Kunststoffhohlprofil innen zu kühlen, wobei an die zellenbildenden Dorne des Werkzeuges Kühlbauteile angeschlossen sind, denen ein Kühlmittel zugeführt wird.

Durch die DE-A-25 23 975 ist es bekannt, zur Innenkühlung eines im Strangpreßwerkzeug gefertigten Kunststoffhohlprofils einen mit einem Gebläse ausgestatteten Kühlkörper zu verwenden, dem als Kühlmittel Wasser zugeführt wird. Die in der Hohlkammer des Kunststoffprofils befindliche Raumluft wird im Bereich dieses Kühlkörpers zwangsweise örtlich begrenzt bewegt.

Der Erfindung liegt die Aufgabe zugrunde, ein Verfahren oder eine Vorrichtung der eingangs genannten Art so zu gestalten, daß die Wirtschaftlichkeit durch eine Erhöhung der Extrusionsgeschwindigkeit verbessert wird.

Diese Aufgabe wird erfindungsgemäß dadurch gelöst, daß aus der Innenkammer oder den Innenkammem des Hohlkammerprofils während der Extrusion des Hohlkammerprofils Luft durch den Kanal oder die Kanäle des Düsenwerkzeugs angesaugt und die am offenen Extrusionsstrang nachströmende Raumluft als Kühlluft verwendet wird.

Fermer wird die oben genannte Aufgabe erfindungs-gemäß durch eine Vorrichtung nach Anspruch 4 und durch eine Vorrichtung nach Anspruch 5 gelöst.

Es kann vorteilhaft sein, dem zwangsbewegten, gasförmigen Kühlmedium eine Geschwindigkeit aufzugeben, bei der sich eine turbulente Strömung ausbildet, da sich hierbei ein erhöhter Wärmetausch einstellt.

Zur Intensiviertung der Kühlwirkung kann das gasförmige Kühlmedium durch in der oder den Innenkammern des Hohlkammerprofils angeordnete, mit dem Kern des Düsenwerkzeugs verbundene Leitmittel den Innenflächen des Hohlprofils zugeführt und an den Innenflächen entlganggeführt werden.

Weitere Ausgestaltungen der Erfindung ergeben sich aus den Unteransprüchen.

Ausführungsbeispiele der Erfindung sind in den Zeichnungen dargestellt und werden im folgenden beschrieben.

Es zeigen:
- Fig. 1: ein Düsenwerkzeug in perspektivischer Darstellung und im Längsschnitt in einer vereinfachten Ausführung,
- Fig. 2: ein Diagramm zu dem Verfahren, bei dem die Strömungsrichtung der Kühlluft der Extrusionsrichtung des Hohlkammerprofils entgegengerichtet ist,
- Fig. 3: ein Diagramm zu dem Verfahren, bei dem die Strömungsrichtung der Kühlluft mit der Extrusionsrichtung des Hohlkammerprofils übereinstimmt,
- Fig. 4: ein Düsenwerkzeug zur Erstellung eines Mehrkammerprofils für Fenster oder Türen in perspektivischer Darstellung und teilweise geschnitten und
- Fig. 5: eine weitere Ausführungsform eines Düsenwerkzeugs mit teilweisem Längsschnitt.

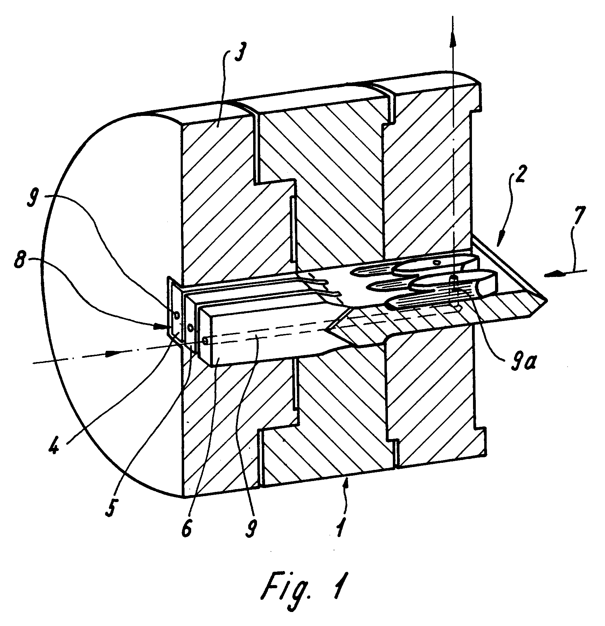

Das in der Fig. 1 aufgezeigte Düsenwerkzeug 1 weist einen Kern 2 auf, der im Bereich einer den Austritt für das stranggepreßte Hohlkammerprofil bildenden Matrize 3 freitragend ausgebildet ist und drei Einzelkerne 4,5,6 aufweist. Diese Einzelkerne bilden mit der Matrize die Querschnittskontur des stranggepreßten Mehrkammerprofils.

Die Kunststoffschmelze wird dem Düsenwerkzeug 1 in Richtung des Pfeiles 7 zugeführt. Das stranggepreßte Profil verläßt das Düsenwerkzeug 8.

Der Kern 2 ist benachbart der Zuführseite mit dem Düsenwerkzeug fest verbunden. Die Einzelkerne 4,5 und 6 weisen jeweils einen Kanal 9 auf, der zunächst in Längsrichtung des Kerns 2 verläuft und kann mit einem unter einem rechten Winkel abzweigenden Kanalteil 9a nach außen geführt wird.

Durch diese Kanäle 9,9a wird ein gasförmiges Kühlmedium, vorzugsweise Kühlluft, entweder entgegen der Extrusionsrichtung oder in Extrusionsrichtung des Hohlkammerprofils bewegt.

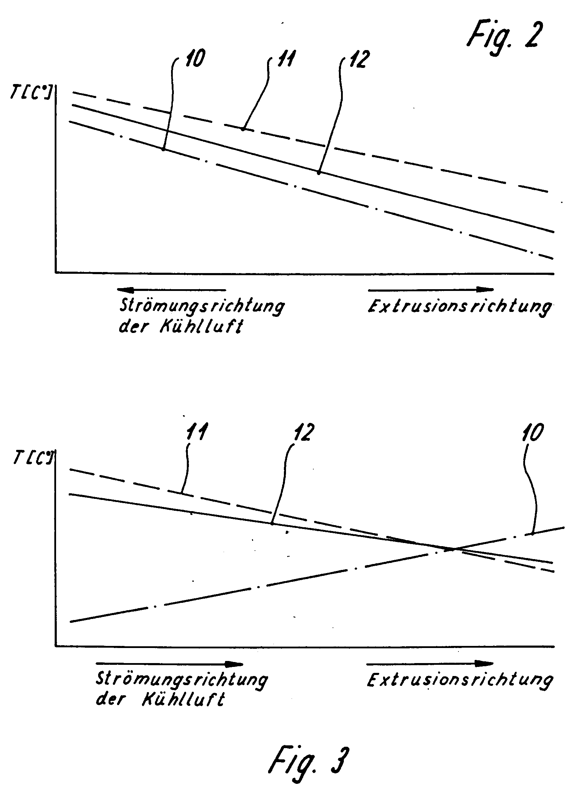

Als vorteilhaft hat sich die in der Fig. 2 aufgezeigte Kühlluftführung entgegen der Extrusionsrichtung des Hohlkammerprofils erwiesen. Bei diesem Verfahren wird am Düsenwerkzeug 1 die Luft aus der Innenkammer oder aus den Innenkammern des Hohlkammerprofils während der Extrusion durch die Kanäle 9,9a abgesaugt, wobei Raumluft als Kühlluft am offenen Extrusionsstrang in den Innenraum des Hohlkammerprofils nachströmt.

Aufgrund der unterschiedlichen Öffnungsquerschnitte der Innenkammer bzw. der Innenkammern und der Kanäle 9,9a wird der Druck in der Innenkammer oder den Innenkammern des Hohlkammerprofils im wesentlichen vom atmosphärischen Druck bestimmt, so daß sich keine Druckdifferenzen ergeben, die die Qualität des Produktes beeinträchtigen könnten.

Der Vorteil bei der beschriebenen Strömungsrichtung der Kühlluft ist darin zu sehen, daß sich der Kühlluftstrom zum Düsenwerkzeug hin erwärmt, was zu einer parallel zur Außenkühlungwirkenden gleichmäßigen Absenkung der Temperatur des Extrusionsgutes führt. Beim Eintritt der Kühlluft in den Bereich des Düsenwerkzeuges hat sich die Luft bereits so stark erwärmt, daß sie nicht störend auf die Funktionstemperatur des Düsenwerkzeuges einwirkt, wobei geringe Temperaturdifferenzen durch einfache Maßnahmen am Düsenwerkzeug unwirksam gemacht werden können.

In der Fig. 2 ist das Bezugszeichen 10 der Kurve zugeordnet, die durch den Kühlluftstrom bestimmt wird, während das Bezugszeichen 11 die durch die Außenkühlung gegebene Kurve zeigt.

Die ausgezogene Linie 12 ist die Temperaturkurve des extrudierten Hohlkammerprofils.

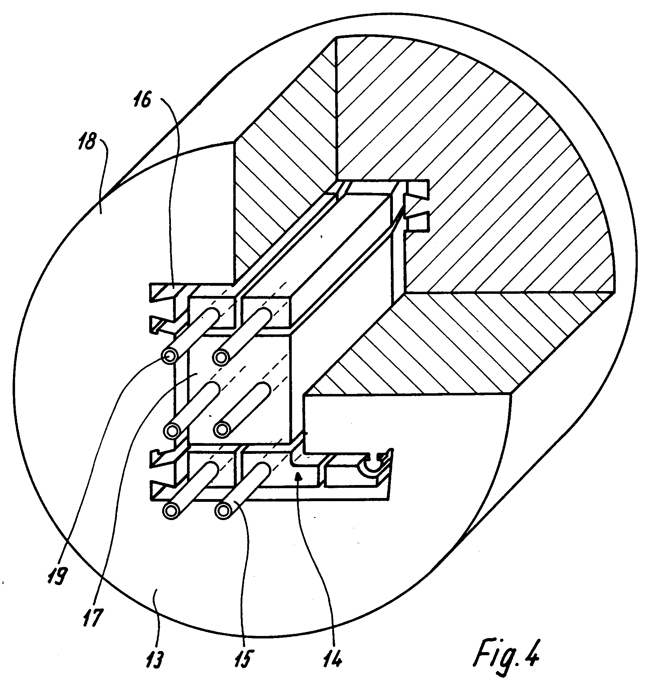

In dem Diagramm nach der Fig. 3, in dem die gleichen Bezugszeichen wie in dem Diagramm nach der Fig. 2 verwendet werden, stimmt die Strömungsrichtung der Kühlluft mit der Extrusionsrichtung des Hohlkammerprofils überein. Bei diesem Verfahren findet zwar eine Temperaturabsenkung des extrudierten Hohlkammerprofils gleich hinter dem Düsenwerkzeug statt, jedoch werden durch Aufheizung der Kühlluft die nachfolgenden Profilbereiche nicht mehr so wirksam gekühlt. Damit im Düsenwerkzeug keine starke Abkühlung auftritt, müssen die Kanäle 9,9a durch schlecht wärmeleitende Materialien begrenzt werden.

Das Verfahren nach der Fig. 2 hat den weiteren Vorteil, daß hierdurch insbesondere im Bereich des Profilabzuges eine stärkere Temperaturabsenkung stattfindet, die eine Verfestigung des Materials mit sich bringt und dadurch eine höhere Abzugsgeschwindigkeit zuläßt.

Die Fig. 2 und 3 zeigen nur die Tendenz der Temperaturverläuft.

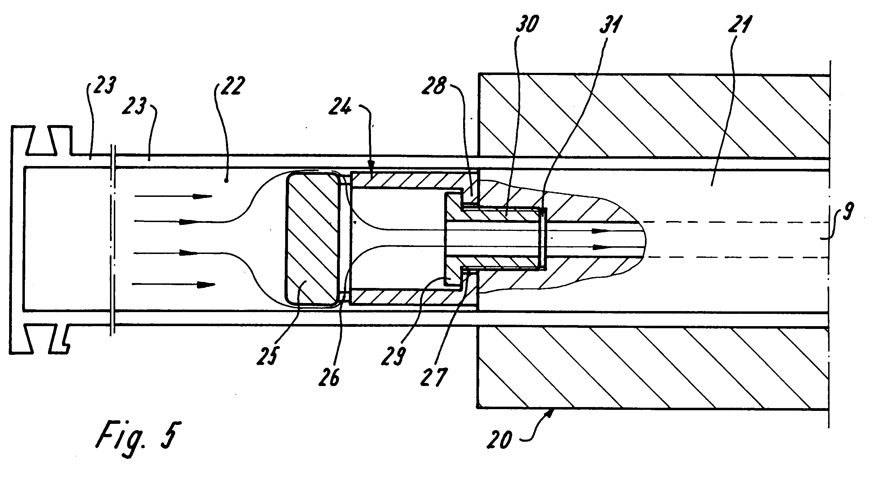

In der Fig. 4 ist eine Matrize 13 mit eingesetztem Kern 14 dargestellt, dessen Kanäle für die Führung des gasförmigen Kühlmediums bzw. der Kühlluft im Bereich des Düsenwerkzeuges als Röhrchen 15 ausgebildet sind. Diese Röhrchen 15 sind aus einem schlecht wärmeleitenden Material gefertigt, so daß das die Röhrchen durchströmende Kühlmedium die Temperatur des Düsenwerkzeuges nicht oder nur unwesentlich beeinflußt.

Im Bereich der Matrize 13 muß die Plastizität des Hohlkammerprofils 16 aufrechterhalten werden.

Aus der Fig. 4 ergibt sich, daß die Röhrchen 15 an der Austrittsseite des Düsenwerkzeuges aus der Stirnfläche 17 des Kernes bzw. aus der Stirnfläche 18 der Matrize, die mit der Stirnfläche 17 fluchtet, herausragen. Die Ausström- bzw. Einströmöffnungen 19 der Röhrchen 15, die nicht nur aus einem schlecht wärmeleitenden Material sondern auch aus einem Material hoher Warmfestigkeit gefertigt sind, liegen im Abstand von den genannten Stirnflächen 17 und 18, so daß der Strom des gasförmigen Kühlmediums, der Kühlluft, beim Saugbetrieb im Abstand vor den Stirnflächen 17,18 endet oder bei einer Einspeisung durch die Röhrchen 15 in die Innenkammern des extrudierten Profils vor den Stirnflächen beginnt. In beiden Fällen übt der Strom des gasförmigen Kühlmediums keine kühlende Wirkung auf das Werkzeug aus, da sich bis zu der Stirnfläche 17 des Kernes ein isolierend wirkendes Luftpolster erstreckt.

Bei dem Ausführungsbeispiel nach der Fig. 5 ist an der Austrittsseite der Matrize 20 vor dem Kern 21 eine der Innenkammer 22 des extrudierten Hohlkammerprofils 23 angepaßte Hülse 24 befestigt, vor der eine Leitplatte 25 durch Stege 26 festgelegt ist.

Im dargestellten Ausführungsbeispiel wird der mit einer Durchsteckbohrung 27 ausgerüstete Boden 28 der Hülse 24 mittels eines Flansches 29 einer Gewindebuchse 30 am Kern 21 festgelegt, die in eine Gewindebohrung 31 des Kernes 21 eingeschraubt wird. Von dieser Gewindebohrung erstreckt sich der Kanal 9, durch den die Kühlluft strömt.

In dem Ausführungsbeispiel weist der Strömungsspalt zwischen der Leitplatte 25 und der Innenwandung des extrudierten Profils 23 die gleiche Weite umlaufend auf.

Sofern das extrudierte Hohlkammerprofil mit mehreren Kammern ausgestattet ist, deren Zwischenwände eine unterschiedliche Dicke gegenüber der Profilaussenwand besitzen, die Spaltweiten zwischen der jeweiligen Leitplatte und einer Zwischenwand bzw. einer Außenwand unterschiedlich sein. Einer Wand größerer Dicke, die intensiver gekühlt werden muß als eine dünnere Zwischenwand, wird ein kleinerer Strömungsspalt zugeordnet, so daß die Strömungsgeschwindigkeit des gasförmigen Kühlmediums in diesem Spalt erhöht ist und die Abkühlung intensiviert wird.

Es besteht aber auch die Möglichkeit, mit einer turbulenten Strömung zu arbeiten, so daß das Kühlmedium mit hoher Geschwindigkeit an den zu kühlenden Flächen vorbeigefügt wird und in der Innenkammer oder in den Innenkammern bzw. den Strömungsspalten zwischen der Leitplatte 25 oder den Leitplatten und den zu kühlenden Innenwandungen Strömungswirbel entstehen.

Aus der Fig. 5 folgt, daß die Strömung der Kühlluft nach dem Passieren der Leitplatte 25 durch die Strömungsspalte zwischen den Stegen 26 in den Innenraum der Hülse 24 geführt wird und anschließend die Gewindebuchse 30 durchströmt und in den Kanal 9 gelangt, der zu einer Vakuumpumpe führt.

Bei dem Werkzeug nach der Fig. 5 erfolgt somit eine intensive Kühlung des extrudierten Hohlkammerprofils 23 im Abstand von der Matrize 20, so daß der Strom des Kühlmediums sich aufheizt und beim Druchströmen des Kanals 9 sich keine nachteilige Auswirkung auf die Temperatur des Düsenwerkzeuges ergibt.

Eine intensive Kühlung der Wandungen des Hohlkammerprofils 23 und auch seiner Innenwandungen ergibt eine verfestigende Wirkung dieser Wandungen und sorgt auch dafür, daß die Abzugsgeschwindigkeit des gesamten Profilstranges erhöht werden kann.

Da die Profilstränge mittels einer Säge auf vorgegebene Längen abgelängt werden, muß vermieden werden, daß sowohl bei der zur Extrusionsrichtung des Hohlkammerprofils gleichgerichteten als auch bei der zur Extrusionsrichtung entgegengerichteten Kühlluftströmung es zu einem kurzzeitigen Verschluß der Innenkammer oder der Innenkammern des Hohlprofils durch das rotierende Sägeblatt kommt. Je nach der Führung der Kühlluft würde es durch diesen Verschluß zu einem Überdruck bzw. zu einem Unterdruck in der Innenkammer des Hohlprofils kommen.

Ein derartiger Unterdruck oder Überdruck in der Innenkammer des stranggepreßten Hohlprofils kann dadurch vermieden werden, daß das Sägeblatt auf dem Umfang verteilte, den Kühlmediumstrom führende Bohrungen aufweist.

Es besteht auch die Möglichkeit, den Sägeblattkörper mit aufgesetzten, seitlich überstehenden Hartmetallschneiden auszurüsten, so daß zwischen den Hartmetallschneiden und dem Sägeblattkörper Strömungsspalte für das Kühlmedium vorhanden sind.

Eine weitere technische Möglichkeit ist dadurch gegeben, daß man am Düsenwerkzeug ein umschaltbares Ventil vorsieht, durch das der Kühlluftstrom geführt wird und zu der Vakuumpumpe gelangt. Bei dem kurzzeitigen Verschluß der stirnseitigen Öffnung des stranggepreßten Hohlprofils durch das Sägeblatt wird durch eine Umschaltung des Ventils auf den Kühlluftstrom in der Innenkammer des Hohlprofils kurzzeitig verzichtet und Umluft angesaugt. Sobald das Sägeblatt eine Teilfläche der endseitigen Öffnung des stranggepreßten Profils wieder freigibt, erfolgt die Schaltung des Ventils in die Ausgangslage, in der der Kühlluftstrom durch die Innenkammer des Hohlprofils gesaugt wird.

Bauprofile, die zur Herstellung von Fenstern, Türen, Rolläden oder dergleichen verwendet werden, weisen im allgemeinen eine Außenwanddicke auf, die eine gute Abkühlung der inneren Kammerwandungen durch die wärmedämmende Wirkung des Materials an sich behindert.

Durch die außen ansetzende direkte Kühlung, z.B. Wasserkühlung, wird ein äußeres Kalibrierungsergebnis beeinflußt. Die Maßhaltigkeit der inneren Kammerwandungen wird nur dann gefördert, wenn die Abzugsgeschwindigkeiten für das extrudierte Profil so gewählt werden, daß ausreichend Zeit für eine Wärmeabfuhr über die äußere Kühlung verbleibt.

Durch den Einsatz der Innenkühlung werden die inneren Kammerwandungen, die zumeist dünner ausgeführt sind als die Konturwandungen, frühzeitiger verfestigt und maßlich fixiert. Durch diese maßliche Fixierung aber auch durch die insgesamte frühzeitige Stabilisierung und Festigkeit kann die Abzugsgeschwindigkeit und damit die Wirtschaftlichkeit bei der Profilherstellung heraufgesetzt werden.

Durch die Maßnahme der Innenkühlung mit einem gasförmigen Medium sind Erhöhungen der Extrusionsgeschwindigkeit des Hohlkammerprofils um mindestens 25 bis 30 Prozent erreichbar.

### Bezugszeichen

- 1: Düsenwerkzeug
- 2: Kern
- 3: Matrize
- 4: Einzelkern
- 5: Einzelkern
- 6: Einzelkern
- 7: Pfeil
- 8: Düsenwerkzeug
- 9: Kanal
- 9a: Kanalteil
- 10: Kurve
- 11: Kurve
- 12: Temperaturkurve
- 13: Matrize
- 14: Kern
- 15: Röhrchen
- 16: Hohlkammerprofil
- 17: Stirnfläche
- 18: Stirnfläche
- 19: Einströmöffnung
- 20: Matrize
- 21: Kern
- 22: Innenkammer
- 23: Hohlkammerprofil
- 24: Hülse
- 25: Leitplatte
- 26: Steg
- 27: Durchsteckbohrung
- 28: Boden
- 29: Flansch
- 30: Gewindebuchse
- 31: Gewindebohrung

## Patentansprüche

1. Verfahren zum Herstellen von strangförmigen Hohlkammerprofilen (23) aus thermoplastischem Kunststoff, insbesondere für die Fertigung von Fenster- oder Türprofilen, bei dem die Kunststoffschmelze einem mit mindestens einem Kern (2,21) versehenen Düsenwerkzeug (1) zugeführt wird, in dem der Kern (2,21) an der Zuführungsseite der Kunststoffschmelze mit dem Werkzeugkörper verbunden und zum Düsenaustritt freitragend angeordnet ist und der Kern mindestens einen von der Stirnseite im Austrittsbereich des Düsenwerkzeuges ausgehenden Kanal (9) für die Kühlmittelführung zwischen der Innenkammer des extrudierten Hohlkammerprofils (23) und der Atmosphäre aufweist, wobei während der Extrusion des Hohlkammerprofils (23) der Kanal (9) des Düsenwerkzeugs und die Innenkammer des Hohlkammerprofils (23) von einem gasförmigen Kühlmedium durchströmt werden, **dadurch gekennzeichnet, daß** aus der Innenkammer oder den Innenkammern des Hohlkammerprofils (23) während der Extrusion des Hohlkammerprofils Luft durch den Kanal (9,9a) oder die Kanäle angesaugt und die am offenen Extrusionsstrang nachströmende Raumluft als Kühlluft verwendet wird.

2. Verfahren nach Anspruch 1, dadurch gekennzeichnet, daß dem zwangsbewegten, gasförmigen Kühlmedium eine Geschwindigkeit aufgegeben wird, bei der sich eine turbulente Strömung ausbildet.

3. Verfahren nach Anspruch 1 oder 2, dadurch gekennzeichnet, daß das gasförmige Kühlmedium durch in der oder den Innenkammern des Hohlkammerprofils (23) angeordnete, mit dem Kern (2,21) des Düsenwerkzeugs (1) verbundene Leitmittel den Innenflächen des Hohlprofils zugeführt und an den Innenflächen entlanggeführt wird.

4. Vorrichtung zur Durchführung des Verfahrens nach Anspruch 2, dadurch gekennzeichnet, daß während der Extrusion des Hohlkammerprofils (23) in der oder in den Innenkammern des Hohlkammerprofils (23) Strömungswirbel bildende Mittel, die mit dem Kern (2,21) des Werkzeugs (1) mittelbar oder unmittelbar verbunden sind, angeordnet sind.

5. Vorrichtung zum Herstellen von strangförmigen Hohlkammerprofilen (23) aus thermoplastischem Kunststoff, insbesondere für die Fertigung von Fenster- oder Türprofilen, mit einem einen Kern (2,21) aufweisenden Düsenwerkzeug (1), wobei der Kern an der Zuführseite der Kunststoffschmelze mit dem Werkzeugkörper verbunden und zum Düsenaustritt freitragend angeordnet ist und der Kern (2,21) mindestens einen an der Stirnseite im Austrittsbereich des Düsenwerkzeuges ausgehende Kanal (9) für die Kühlmittelführung zwischen der Innenkammer des extrudierten Hohlkammperofils (23) und der Atmosphäre aufweist, dadurch gekennzeichnet, daß der Kanal (9,9a) oder die Kanäle mit einer Vakuumpumpe verbunden sind.

6. Vorrichtung nach Anspruch 5, dadurch gekennzeichnet, daß an der Austrittsseite des Düsenwerkzeuges an dem Kern (21) eine der Innenkammer (22) des extrudierten Hohlkammerprofils (23) angepaßte Hülse (24) befestigt ist, vor der eine Leitplanke (25) durch Stege (26) festgelegt ist, die einen umlaufenden, durch die Stege (26) unterbrochene Strömungsspalt mit der Hülse (24) bildet.

## Claims

1. A process for producing extruded hollow-chamber shaped members (23) of thermoplastic material, in particular for the production of shaped window or door members, in which the molten plastics material is fed to a nozzle tool (1) which is provided with at least one core (2, 21) and in which the core (2, 21) is connected to the tool body at the feed side of the molten plastics material and is arranged in cantilever relationship towards the nozzle outlet and the core has at least one duct (9) extending from the end in the outlet region of the nozzle tool for guiding coolant between the inside chamber of the extruded hollow-chamber shaped member (23) and the atmosphere, wherein during extrusion of the hollow-chamber shaped member (23) the duct (9) of the nozzle tool and the inside chamber of the hollow-chamber shaped member (23) have a gaseous cooling medium flowing therethrough, characterised in that air is sucked in through the duct (9, 9a) or the ducts from the inside chamber or chambers of the hollow-chamber shaped member (23) during extrusion of the hollow-chamber shaped member and the room air which subsequently flows along the open extrusion is used as cooling air.

2. A process according to claim 1 characterised in that a speed is imparted to the positively moved gaseous cooling medium, at which a turbulent flow is formed.

3. A process according to claim 1 or claim 2 characterised in that the gaseous cooling medium is fed to the inside surfaces of the hollow shaped member by guide means which are arranged in the inside chamber or chambers of the hollow-chamber shaped member (23) and which are connected to the core (2, 21) of the nozzle tool (1), and is guided along the inside surfaces.

4. Apparatus for carrying out the process according to claim 2 characterised in that there are provided means which form flow eddies during extrusion of the hollow-chamber shaped member (23) in the inside chamber or chambers of the hollow-chamber shaped member (23), said means being directly or indirectly connected to the core (2, 21) of the tool (1).

5. Apparatus for producing extruded hollow-chamber shaped members (23) of thermoplastic material, in particular for the production of shaped window or door members, having a nozzle tool (1) which has a core (2, 21), wherein the core is connected to the tool body at the feed side of the molten plastics material and is arranged in cantilever relationship towards the nozzle outlet and the core (2, 21) has at least one duct (9) starting at the end in the outlet region of the nozzle tool for guiding coolant between the inside chamber of the extruded hollow-chamber shaped member (23) and the atmosphere, characterised in that the duct (9, 9a) or the ducts are connected to a vacuum pump.

6. Apparatus according to claim 5 characterised in that fixed at the outlet side of the nozzle tool to the core (21) is a sleeve (24) which is adapted to the inside chamber (22) of the extruded hollow-chamber shaped member (23) and in front of which a guide barrier (25) is fixed by legs (26), the guide barrier forming a peripherally extending flow clearance with the sleeve (24), which clearance is interrupted by the legs (26).

## Revendications

1. Procédé de fabrication de profilés à chambre creuse (23) en forme de barres en matière thermoplastique, en particulier pour la fabrication de profilés de fenêtres ou de portes, dans lequel la matière plastique en fusion est envoyée à un outil à buses (1) pourvu d'au moins un noyau (2, 21), dans lequel le noyau (2, 21) est relié, sur le côté d'amenée de la matière plastique en fusion, avec le corps d'outil et est placé en porte-à-faux à la sortie des buses et le noyau comporte au moins un canal (9), partant du côté frontal dans la zone de sortie de l'outil à buses pour le passage du réfrigérant, entre la chambre intérieure du profilé à chambre creuse (23) extrudé et l'atmosphère, le canal (9) de l'outil à buses et la chambre intérieure du profilé à chambre creuse (23) étant traversés par un réfrigérant gazeux, pendant l'extrusion du profilé à chambre creuse (23), caractérisé en ce qu'à partir de la chambre creuse ou des chambres creuses du profilé à chambre creuse (23), pendant l'extrusion du profilé à chambre creuse, de l'air est aspiré à travers le canal (9, 9a) ou les canaux et l'air ambiant s'écoulant derrière, sur le boudin d'extrusion ouvert, est utilisé comme air de refroidissement.

2. Procédé selon la revendication 1, caractérisé en ce qu'au réfrigérant gazeux, déplacé par force, il est conféré une vitesse pour laquelle il se forme un écoulement turbulent.

3. Procédé selon la revendication 1 ou 2, caractérisé en ce que le réfrigérant gazeux est envoyé aux surfaces intérieures du profilé creux, par des moyens de guidage placés dans la ou les chambres intérieures du profilé à chambre creuse (23), reliés au noyau (2, 21) de l'outil à buses (1), et est guidé le long des surfaces intérieures.

4. Dispositif pour la mise en oeuvre du procédé selon la revendication 2, caractérisé en ce que pendant l'extrusion du profilé à chambre creuse (23) sont prévus, dans la ou dans les chambres creuses du profilé à chambre creuse (23), des moyens formant des tourbillons d'écoulement, qui sont reliés directement ou indirectement au noyau (2, 21) de l'outil (1).

5. Dispositif pour la fabrication de profilés à chambre creuse (23) en forme de barres dans une matière thermoplastique, en particulier pour la fabrication de profilés de fenêtres ou de portes, dans lequel la matière plastique en fusion est envoyée à un outil à buses (1) pourvu d'au moins un noyau (2, 21), dans lequel le noyau (2, 21) est relié, sur le côté d'amenée de la matière plastique en fusion, avec le corps d'outil et est placé en porte-à-faux à la sortie des buses et le noyau comporte au moins un canal (9), partant du côté frontal dans la zone de sortie de l'outil à buses pour le passage du réfrigérant, entre la chambre intérieure du profilé à chambre creuse (23) extrudé et l'atmosphère, caractérisé en ce que le canal (9, 9a) ou les canaux sont reliés à une pompe à vide.

6. Dispositif selon la revendication 5, caractérisé en ce que sur le côté de sortie de l'outil à buses est fixé, au noyau (21), un manchon (24) adapté à la chambre intérieure (22) du profilé à chambre creuse (23) extrudé, devant lequel est fixée, par des ponts (26), une plaque de guidage (25) qui forme avec le manchon (24) une fente d'écoulement périphérique, interrompue par les ponts (26).
